# EUROPEAN PATENT APPLICATION

(11) **EP 1 892 647 A2**
(43) Date of publication of application: **27.02.2008**
(21) Application number: 07109167.2
(22) Date of filing: 30.05.2007
(51) Int. Cl.: G06K 15/12

(54) **Beam scanning lens, beam scanning apparatus having the same, and image forming apparatus and method**

(30) Priority: 25.08.2006 KR 20060081185
(71) Applicant: SAMSUNG ELECTRONICS CO., LTD., Suwon-si, Gyeonggi-do (KR)
(72) Inventor: Kim, Wook-bae, Gyeonggi-do Suwon-si (KR)
(74) Representative: Waddington, Richard

(57) **Abstract**

A beam-scanning lens (100) used in a scanning image forming optical system includes a single lens (100) molded from plastic having a refractive index distribution curve (Δn(x)) and an effective area (107), such that a gap between a center axis (CL) of the refractive index distribution curve (Δn(x)) and a width centerline (105) of the effective area (107) is increased from a center of the single lens (100) to both ends of a lengthwise direction of the single lens (100).

## Description

The present invention relates to a beam-scanning lens to scan image-forming optical systems, beam scanning apparatus and method, and image forming apparatus and method.

Generally, electro photographic image forming apparatuses like laser printers use beam scanning apparatuses including a scanning image forming optical system. In the beam scanning apparatuses, a lighting source emits a light beam optically modulated according to image signals, and an optical deflector like a rotating polygonal mirror periodically deflects the light beam. The light beam is focused and scanned on a photosensitive surface of a photosensitive medium like a photosensitive drum by an image forming lens with an f-theta feature (hereinafter, referred to as a beam-scanning lens) so as to form images.

The scanning image forming optical system is optically designed so that lenses, such as collimating lenses, cylindrical lenses, beam scanning lenses, and so on, an optical deflector, mirrors, and a window are properly arranged between a lighting source and the photosensitive medium for a light beam emitting from the lighting source to form a straight scanning line on the surface of the photosensitive medium. However, when many optical parts as described above are assembled according to the design, a central axe of some optical parts is deviated from an optical axis so as to cause an assembling error like a position error and a posture error. Because of the assembling error of the optical parts, the scanning line formed on the surface of the photosensitive medium is bowed, and beam spots forming the scanning line have no uniform diameter. The bowed scanning line and the beam spot with no uniform diameter may cause a color jitter in color image forming apparatuses that superimpose images formed by a plurality of light beams into full color images. Therefore, adjusting the scanning line is required to have a uniform diameter.

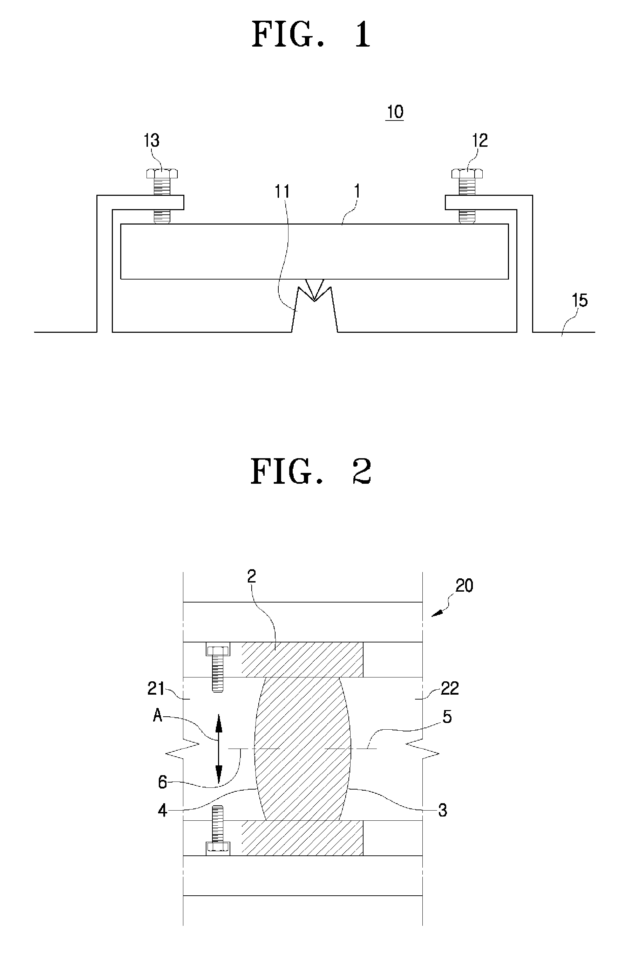

FIG. 1 illustrates an adjusting apparatus 10 to bend a beam-scanning lens 1 to adjust a scanning line bow on a surface of a photosensitive medium.

Referring to FIG. 1, the beam scanning lens 1 is mounted between a reference protrusion 11 and adjusting bolts 12 and 13 disposed at both ends of the adjusting apparatus 10. A reference protrusion 11 is formed under a center of a main scanning direction of the beam-scanning lens 1. Tightening the adjusting bolts 12 and 13, both ends of the beam-scanning lens 1 are pressed so that the beam-scanning lens 1 is convexly bent. To bend the beam-scanning lens 1 can adjust a bow of the scanning line passing through the beam-scanning lens 1. Therefore, the scanning line is formed in a substantially straight line on the photosensitive medium (not illustrated).

However, because the beam scanning apparatus using the adjusting apparatus 10 as described above is required to have a separate adjusting apparatus 10 for adjusting the beam-scanning lens 1, a manufacturing cost and an assembling time are increased. Also, when adjusting the beam-scanning lens 1, a force is applied to a frame 15 of the beam scanning apparatus. As a result, the frame 15 is deformed so that a diameter of a beam spot focusing on the photosensitive medium may be larger.

For solving the above problem, there has been developed a method that can adjust the scanning line bow not using any separate adjusting apparatus 10. FIG. 2 illustrates a beam-scanning lens 2 injected by injection dies 20. When the beam-scanning lens 2 was being injected, a front surface 3 and a back surface 4 thereof are decentered in a sub scanning direction (arrow A direction) so that a center 5 of the front surface 3 is not aligned with a center 6 of the back surface 4. In other words, at least one of two main cores 22 and 21 for molding the front and back surfaces 3 and 4 of the beam-scanning lens 2 has an adjusting means that can adjust the main core 22 and 21 in the sub scanning direction (arrow A) as illustrated in FIG. 2. Therefore, adjusting the main core 21 can provide a beam-scanning lens 2 in that the center 5 of the front surface 3 and the center 6 of the back surface 4 are eccentric (i.e. deviating from the center of the lens, by protruding outward in a convex manner) to each other at a predetermined distance. The beam-scanning lens 2 having the centers 5 and 6 of the front and back surfaces 3 and 4 eccentric to each other may solve the scanning line bow.

However, the method forcing centers 5 and 6 of the front and back surfaces 3 and 4 of the beam-scanning lens 2 to be eccentric to each other when injecting the beam-scanning lens 2 requires at least one main core 22 and 21 of the injection die 20 to move. Therefore, the injection die 20 has a complicated structure so that an injection die cost is increased. Also, because the injection die 20 is eccentric, it is difficult to take the beam-scanning lens 2 out of the injection die 20.

The invention provides a beam-scanning lens, a beam scanning apparatus having the same, and an image forming apparatus that can adjust a scanning line bow occurring when assembling optical parts of a scanning image forming optical system, and a method thereof.

Additional aspects and utilities of the present general inventive concept will be set forth in part in the description which follows and, in part, will be obvious from the description, or may be learned by practice of the general inventive concept.

According to the present invention there is provided an apparatus and method as set forth in the appended claims. Preferred features of the invention will be apparent from the dependent claims, and the description which follows.

According to an aspect of the present invention, there is provided a beam-scanning lens that is adapted to be used in a scanning image forming optical system, the beam-scanning lens including a single lens molded from plastic, and having a refractive index distribution curve and an effective area that a gap between a center axis of the refractive index distribution curve and a width centerline of the effective area may be increased from a center of the single lens to both ends of a lengthwise direction of the single lens.

A dimension of the gap between the center axis of the refractive index distribution curve and the width centerline of the effective area may be zero at the center of the lengthwise direction of the single lens.

Also, a dimension of the gap between the center axis of the refractive index distribution curve and the width centerline of the effective area may vary from zero to a width dimension of a center plane (101) of the lengthwise direction of the single lens.

A width centerline of the single lens may be located within the effective area of the single lens at the center of the lengthwise direction of the single lens, and the width centerline of the single lens is located out of the effective area of the single lens at both ends of the lengthwise direction of the single lens, and a dimension of the gap between the width centerline of the single lens and the width centerline of the effective area may vary from zero to a width dimension of the center plane of the lengthwise direction of the single lens.

According to another aspect of the present invention, there is provided a beam-scanning lens that is adapted to be used in a scanning image forming optical system, the beam-scanning lens including a single lens molded from plastic, the single lens including a first side being parallel to a main scanning direction of the single lens and formed in a plane, and a second side opposite to the first side and formed in a concave curved surface.

The second side may be symmetric to a center axis thereof, and the center axis may be located on the same level as a center plane of the lengthwise direction of the single lens.

The second side may be formed by a gap between a center axis of a refractive index distribution curve of a subscanning direction of the single lens and a width centerline of an effective area of the single lens being increased from a center of the single lens to both ends of a lengthwise direction of the single lens so that the single lens adjusts the scanning line bowed before entering the single lens.

A dimension of the gap between the center axis of the refractive index distribution curve and the width centerline of the effective area of the single lens may vary from zero to a width dimension of the center plane of the lengthwise direction of the single lens.

According to another aspect of the present invention, there is provided a beam scanning apparatus which includes a lighting source, an optical deflector to deflect a beam that emits from the lighting source, and a beam-scanning lens to focus the beam that is reflected from the optical deflector to a photosensitive medium, wherein the beam-scanning lens has a refractive index distribution curve and an effective area, wherein a gap between a center axis of the refractive index distribution curve and a width centerline of the effective area is increased from a center of the beam-scanning lens to both ends of a lengthwise direction of the beam-scanning lens.

According to another aspect of the present invention, there is provided an image forming apparatus including a paper loading unit to pick up and feed out sheets of paper loaded therein one by one, an image forming unit having a photosensitive medium for transferring images onto the sheet of paper fed by the paper loading unit, a beam scanning apparatus to scan a beam corresponding to printing data so as to form electrostatic latent images on the photosensitive medium, and having a plastic beam-scanning lens to focus the beam onto the photosensitive medium, the beam-scanning lens having a refractive index distribution curve Δn(x), and an effective area, such that a gap between a center axis of the refractive index distribution curve and a width centerline of the effective area is increased from a center of the beam-scanning lens to both ends of a lengthwise direction of the beam-scanning lens, a fixing unit to fix the images onto the sheet of paper passed through the image forming unit, and a discharging unit to discharge the sheet of paper passed through the fixing unit.

According to another aspect of the present invention, there is provided a method of scanning a beam from a beam-scanning lens that is used in a scanning image forming optical system to prevent the beam from bowing in a beam scanning apparatus, the method including deflecting a beam of light; and focusing the beam of light onto a photosensitive medium using a beam-scanning lens having a refractive index distribution curve, and an effective area such that a gap between a center axis of the refractive index distribution curve and a width centerline of the effective area is increased from a center of the beam-scanning lens to both ends of a lengthwise direction of the beam-scanning lens.

According to another aspect of the present invention, there is provided a method of scanning a beam from a beam-scanning lens that is used in a scanning image forming optical system to prevent a scanning line bow in an image forming apparatus, the method including transferring images onto a sheet of paper, scanning a beam of light corresponding to printing data to form electrostatic latent images on a photosensitive medium; focusing the beam of light onto the photosensitive medium using a beam-scanning lens having a refractive index distribution curve and an effective area such that a gap between a center axis of the refractive index distribution curve and a width centerline of the effective area is increased from a center of the beam-scanning lens to both ends of a lengthwise direction of the beam-scanning lens, fixing the images onto the sheet of paper, and discharging the sheet of paper.

According to another aspect of the present invention, there is provided a beam scanning lens usable in a scanning image forming optical system, the beam scanning lens including a single lens having (first and second) opposite sides which are decentered from each other such that a reflective index increases from a center thereof to opposite ends thereof in a first direction and such that a second reflective index increases from the center thereof to the opposite ends thereof in a second direction.

The beam scanning lens may include the first direction being a lengthwise direction of the single lens, and the second direction being perpendicular to the first direction.

The beam scanning lens may include a flat surface and a concave surface, respectively.

The beam scanning lens may further include another opposite side disposed between the opposite sides in a lengthwise direction of the single lens such that a reflective index distribution curve has a second ordered curve shape.

The beam scanning lens may further include an effective area formed along the second direction to allow a beam to pass a centerline thereof, and the centerline of the effective area is not a centerline of the opposite sides.

According to another aspect of the present invention, there is provided a beam scanning apparatus usable in a scanning image forming optical system, the beam scanning lens including a photo sensitive medium, and a single lens disposed between the optical reflector and the photo sensitive medium to sum a received light from the optical reflector onto the photo sensitive medium, the single lens including opposite sides which are decentered from each other such that a reflective index increases from a center thereof to opposite ends thereof in a first direction and such that a second reflective index increases from the center thereof to the opposite ends thereof in a second direction.

According to another aspect of the present invention, there is provided a beam scanning lens usable in a scanning image forming optical system, the beam scanning lens including an effective area having a width centerline through which a beam of light passes, a width centerline of the beam scanning lens to coincide with the width centerline of the effective area at a center axis of the beam scanning lens, and two ends at which the width centerline of the effective area is apart from the width centerline of the mean scanning lens.

According to another aspect of the present invention, there is provided a beam scanning lens usable in a scanning image forming optical system, the beam scanning lens including a first side, a second side spaced apart from the first side, and having a width centerline between the first side and the second side, and an effective area formed between the first side and the second side and having another centerline through which a beam passes, the another centerline being concave with the width centerline of the first side and the second side at a center thereof and being different from the width centerline of the first side and the second side at ends thereof.

Shapes of the first side and the second side may vary along the width centerline of the effective area.

For a better understanding of the invention, and to show how embodiments of the same may be carried into effect, reference will now be made, by way of example, to the accompanying diagrammatic drawings in which:
FIG. 1 is a view illustrating an example of conventional lens adjusting apparatuses to adjust a scanning line bow;
FIG. 2 is a view schematically illustrating an example of conventional injection dies for a beam-scanning lens;
FIG. 3 is a perspective view illustrating an example of conventional plastic beam-scanning lenses;
FIG. 4 is a view illustrating an inside refractive index distribution of the beam-scanning lens of FIG. 3;
FIG. 5 is a perspective view illustrating a beam-scanning lens according to an embodiment of the present general inventive concept;
FIG. 6 is a plan view illustrating the beam-scanning lens of FIG. 5;
FIG. 7 is a view illustrating a refractive index distribution of a cross-section of the beam-scanning lens taken along a line VII-VII of FIG. 6;
FIG. 8 is a view illustrating a refractive index distribution of a cross-section of the beam-scanning lens taken along a line VIII-VIII of FIG. 6;
FIG. 9 is a view illustrating a refractive index distribution of a cross-section of the beam-scanning lens taken along a line IX-IX of FIG. 6;
FIG. 10 is a view schematically illustrating optical parts of a beam scanning apparatus having a beam-scanning lens according to an embodiment of the present general inventive concept; and
FIG. 11 is a sectional view schematically illustrating an image forming apparatus having the beam scanning apparatus of FIG. 10.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

A beam-scanning lens according to an embodiment of the present general inventive concept may be molded from plastic resins. When the plastic beam-scanning lens is manufactured, the plastic resin is melted and then poured into an injection die for a beam-scanning lens. The melted plastic resin is cooled into a beam-scanning lens within the injection die. Because an outer part of the beam-scanning lens that touches the injection die is cooled faster than an inner part thereof, a density distribution of the plastic beam-scanning lens is not uniform. Accordingly, a density of a part cooled quickly is higher than a density of a part cooled slowly, so that an inner density distribution of the plastic beam-scanning lens is not uniform. In the plastic beam-scanning lens, the outer part generally has a high refractive index, and a center part through which light beam passes has the lowest refractive index.

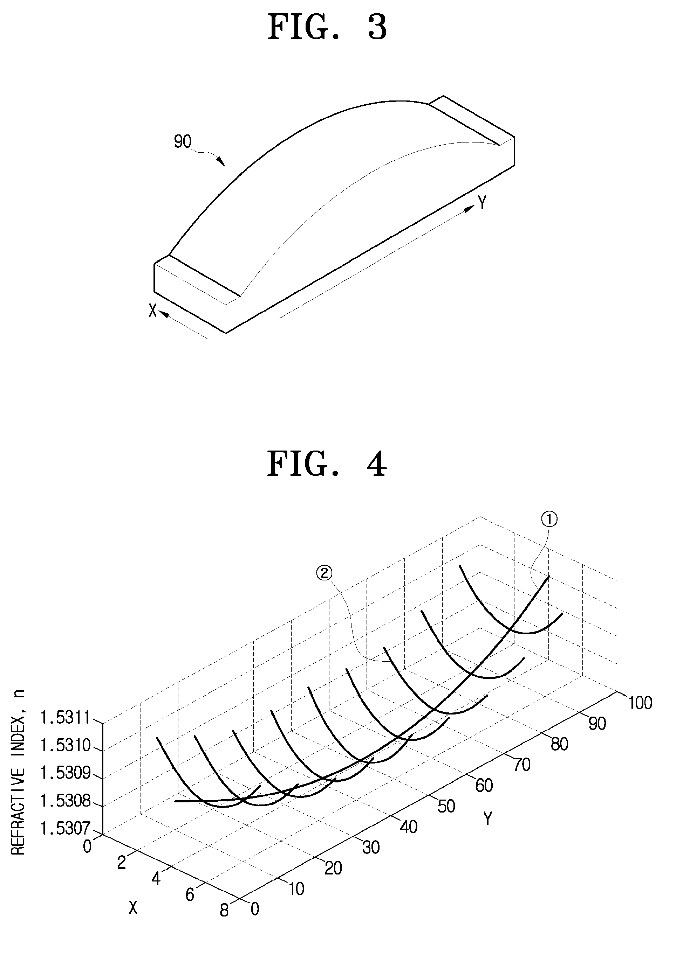

A plastic beam-scanning lens 90 as illustrated in FIG. 3 has a refractive index distribution curve as illustrated in FIG. 4. Referring to FIG. 4, in a main scanning direction (Y direction) of the beam-scanning lens 90 of FIG. 3, a refractive index increases from a center to both ends so that the refractive index distribution curve (graph ①) has a second ordered curve shape that is symmetric with respect to a center of a lengthwise direction of the beam-scanning lens 90. Also, in a sub scanning direction (X direction) of the beam-scanning lens 90, a refractive index increases from a center to both sides so that at each scanning position, namely at each point of the refractive index distribution curve (graph ①) of the main scanning direction, a refractive index distribution curve (graph ②) has a second ordered curve shape that is symmetric with respect to a width center of the beam-scanning lens 90. When the refractive index distribution curve is referred as Δn(x), modeling measured results gives a formula : Δn(x) = n₀x² + n₁.

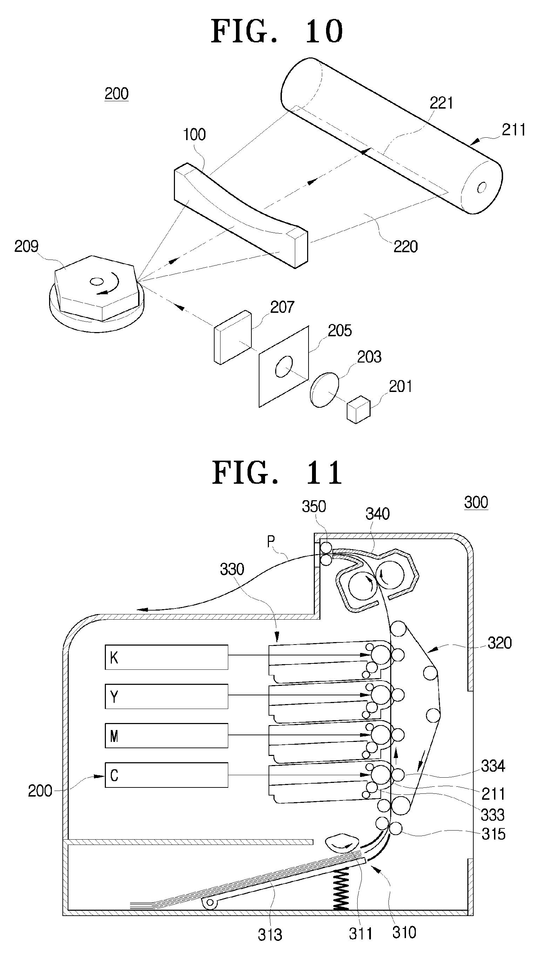

The main scanning direction of the beam-scanning lens 90 is a direction that the beam reflected by an optical deflector 209, as illustrated in FIG. 10, is scanned, and corresponds to a lengthwise direction (Y direction) of the beam-scanning lens 90 of FIG. 3. The sub scanning direction is a direction vertical with respect to the main scanning direction, and corresponds to a widthwise direction (X direction) of the beam-scanning lens 90 of FIG. 3. The sub scanning direction (X direction) may be parallel to a tangential line of a scanning line 221 of a photosensitive medium 211 as illustrated in FIG. 11, or a direction perpendicular to a rotation axis of a photosensitive medium 211 as illustrated in FIG. 10.

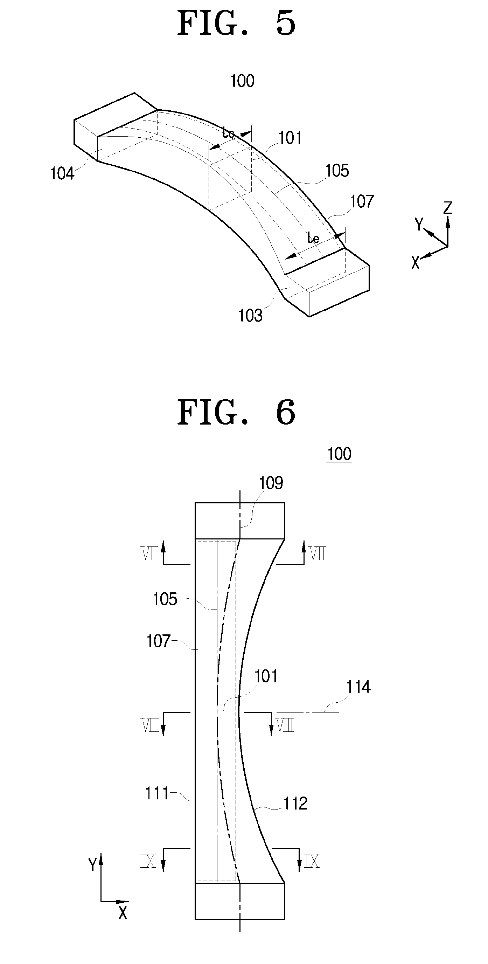

In contrast, variations of a shape and a size of a section of the beam-scanning lens 90 cause the refractive index distribution Δn(x) at the section to change. The present general inventive concept changes sizes of sections of a beam-scanning lens 100 as illustrated in FIGS. 5 and 6 in the main scanning direction (Y direction) to change the refractive index distribution Δn(x) at each section to adjust a scanning line bow that occurs when assembling a scanning image forming optical system. In other words, the beam-scanning lens 100 according to the present general inventive concept can adjust a bowed scanning line before the scanning line enters the beam-scanning lens 100 so that the scanning line is formed in a straight line on a surface of a photosensitive medium 211 as illustrated in FIG. 10.

FIGS. 5 and 6 are a perspective view and a plan view illustrating a beam-scanning lens 100 according to an embodiment of the present general inventive concept, respectively.

Referring to FIGS. 5 and 6, the beam-scanning lens 100 according to an embodiment of the present general inventive concept has a section having a size to be changed in the main scanning direction (Y direction). Changing the size of the section causes the refractive index distribution Δn(x) to change. At this time, an effective area 107 of the beam-scanning lens 100, represented by a dotted line in FIG. 6 through which a beam passes, is close to a side of the beam-scanning lens 100. The beam passes substantially through a width centerline 105 of the effective area 107.

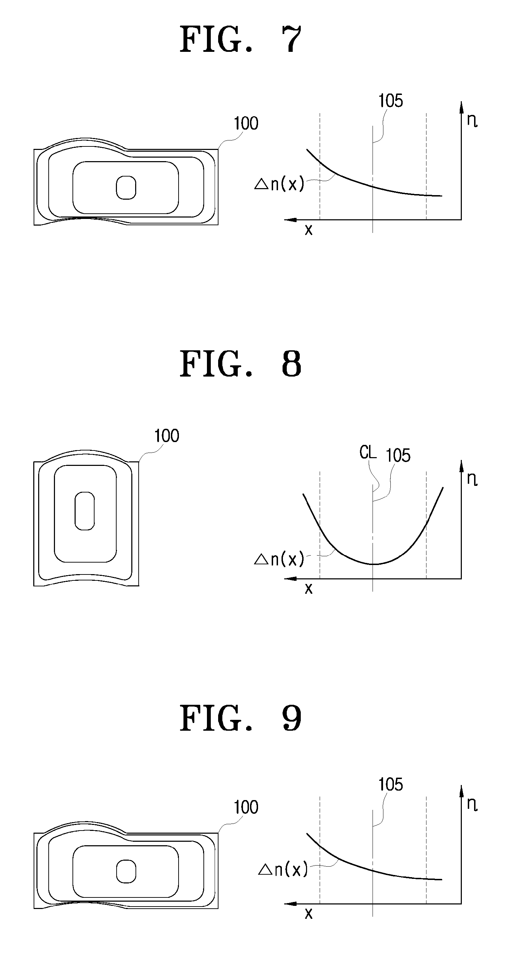

FIGS. 7 to 9 are views illustrating the refractive index distribution Δn(x) of section of the beam-scanning lens 100 of FIGS. 5 and 6. FIGS. 7 and 9 respectively illustrate a refractive index profile and a refractive index distribution graph of sections that are cut at around ends 103 and 104, respectively, of the beam-scanning lens 100 of FIG. 6. The cuts around the ends 103 and 104 are represented by a VII-VII line of FIG. 6 and a IX-IX line of FIG. 6, respectively. FIG. 8 illustrates a refractive index profile and a refractive index distribution graph of a section that is cut at a center plane 101 of the lengthwise direction of the beam-scanning lens 100 of FIG. 6, namely, at a VIII-VIII line of FIG. 6.

At the center plane 101 of the lengthwise direction of the beam-scanning lens 100 according to an embodiment of the present general inventive concept, a width centerline 109 of the beam-scanning lens 100 substantially coincides with the width centerline 105 of the effective area 107. Therefore, as illustrated in FIG. 8, a center axis CL of the refractive index distribution curve Δn(x) coincides with the width centerline 105 of the effective area 107.

In contrast, nearby the ends 103 and 104 of the lengthwise direction of the beam-scanning lens 100 of FIG. 6, the width of the beam-scanning lens 100 is wider than the width of the center plane 101 of the beam-scanning lens 100, and the effective area 107 is not at a width centerline 109 of the beam-scanning lens 100 but apart from the width centerline 109 thereof. In other words, the width centerline 109 of the beam-scanning lens 100 is apart from the width centerline 105 of the effective area 107. As a result, the center axis CL of the refractive index distribution curve Δn(x) is at a predetermined distance apart from the width centerline 105 of the effective area 107. Although the center axis CL of the refractive index distribution curve Δn(x) is not illustrated in FIGS. 7 and 9, the center axis CL is located nearby the n axis. As a result, in the effective area 107 of the beam-scanning lens 100, the refractive index distribution curve Δn(x) is inclined in one direction as illustrated in FIGS. 7 and 9, which causes the beam to focus on the surface of the photosensitive medium 211 of FIG. 10, namely, a surface on which images are formed to move to a low refractive index direction. Therefore, since the center axis CL of the refractive index distribution curve Δn(x) moves according to the section size of the beam-scanning lens 100, we can adjust a scanning line bow. At this time, in the narrow effective area 107 of the beam-scanning lens 100, the refractive index distribution curve Δn(x) is approximately formed in a first ordered linear equation.

In contrast, each section in the main scanning direction (Y direction) of the beam-scanning lens 100 requires a refractive index distribution that can adjust the scanning line bow at the corresponding section. Accordingly, the beam-scanning lens 100 may include a width to gently change along the length direction (Y direction) of the beam-scanning lens 100. For example, curves, such as second ordered curves like d(y) = Ay² + By + C, curves satisfying circular equations, hyperbolic curves, conical curves like a parabola, can be used to form one side of the beam-scanning lens.

The beam-scanning lens 100, according to an embodiment of the present general inventive concept, includes two sides 111 and 112, respectively, disposed in the lengthwise direction (Y direction) of the beam-scanning lens 100 where the side 111 is a plane and the opposite side 112 is a concave curved surface as illustrated in FIG. 6. In other words, the two sides 111 and 112 of the beam-scanning lens are above and below a scanning plane 220, as illustrated in FIG. 10, formed in the main scanning direction (Y direction) of the beam-scanning lens 100, respectively. The first side 111 of the two sides may be formed in a plane parallel to the scanning plane 220, and the second side 112 opposite to the first side 111 may be formed in a concave curved surface with respect to the scanning plane 220. At this time, the second side 112 is symmetric with respect to the center axis 114 of the second side 112. The center axis 114 is located on the same level as the center plane 101 of the lengthwise direction of the beam-scanning lens 100. Here, the scanning plane 220 is an imaginary plane that outlines a beam path while the beam reflected by the optical deflector 209 of FIG. 10 passes through the beam-scanning lens 100, and then, forms a scanning line 221, as illustrated in FIG. 10 on a surface of the photosensitive medium 211 of FIG. 10.

Also, the second side 112 is formed so that a gap between the center axis CL of the refractive index distribution curve Δn(x) of the sub scanning direction (X direction) of the beam-scanning lens 100 and the width centerline 105 of the effective area 107 of the beam-scanning lens 100 is increased from the center plane 101 of the beam-scanning lens 100 to both ends 103 and 104 in the lengthwise direction of the beam-scanning lens 100, thereby adjusting the scanning line bow in the main scanning direction (Y direction). In other words, the beam-scanning lens 100 is formed such that the widths (le) of the ends 103 and 104 are wider than the width (1c) of the center plane 101 of the lengthwise direction of the beam-scanning lens 100. Therefore, the beam-scanning lens 100 can adjust a scanning line bow of the main scanning direction (Y direction). A dimension of the gap between the center axis CL of the refractive index distribution curve Δn(x) of each section and the width centerline 105 of the effective area 107 of the beam-scanning lens 100 may be configured to vary from zero to a width dimension (1c) of the center plane 101 of the lengthwise direction of the beam-scanning lens 100 at its maximum.

Accordingly, a beam that is bowed before entering the beam-scanning lens 100 is adjusted in a straight line by the beam-scanning lens 100, so that the scanning line 221 formed on the photosensitive medium 211 is not bowed, and diameters of beam spots that form the scanning line 221 on the photosensitive medium 211 maintain constant sizes.

FIG. 10 is a view illustrating an example of a beam scanning apparatus 200 using a beam-scanning lens 100 according to an embodiment of the present general inventive concept.

Referring to FIG. 10, the beam scanning apparatus 200, according to an embodiment of the present general inventive concept, scans a beam emitting from a lighting source 201 to the photosensitive medium 211 to form electrostatic latent images corresponding to printing data. The beam scanning apparatus 200 includes a lighting source 201, a collimating lens 203, an aperture 205, a cylindrical lens 207, an optical deflector 209, and a beam-scanning lens 100.

The beam-scanning lens 100 focuses a beam reflected on the optical deflector 209 to the photosensitive medium 211. Since the beam-scanning lens 100 has been described above with reference to Figs. 5-9, a detailed description of the beam-scanning lens 100 is omitted. Also, other parts of the beam scanning apparatus 200 according to the present general inventive concept, except the beam-scanning lens 100, are the same as those of the conventional beam scanning apparatus, and therefore, detailed descriptions of other parts of the beam scanning apparatus 200 are omitted.

Hereinafter, operation of the beam scanning apparatus 200 will be described with reference of FIG. 10.

Light emits from the lighting source 201 and is transformed into a substantially parallel beam by the collimating lens 203. The beam is regulated by the aperture 205, and then the beam enters the cylindrical lens 207. The beam passed through the cylindrical lens 207 is reflected by the optical deflector 209 which rotates in one direction, and then, enters the beam-scanning lens 100. The beam passed through the beam-scanning lens 100 is scanned on the surface of the photosensitive medium 211 at a substantially uniform velocity in one direction.

At this time, because the beam scanning apparatus 200 uses the beam-scanning lens 100 according to an embodiment of the present general inventive concept, a scanning line bow caused by an assembling error is properly adjusted by the beam-scanning lens 100. Therefore, the scanning line 221 formed on the photosensitive medium 211 by the beam scanning apparatus 200 according to the present general inventive concept is not bowed, and the beam spots focusing on the photosensitive medium 211 have a substantially uniform diameter while scanning.

FIG. 11 illustrates an example of an image forming apparatus 300 having a beam scanning apparatus 200 that uses a beam-scanning lens 100 according to an embodiment of the present general inventive concept.

The image forming apparatus 300, according to an embodiment of the present general inventive concept, forms images corresponding to printing data using the beam scanning apparatus 200, and transfers the images onto sheets of paper. Referring to FIG. 11, the image forming apparatus 300 includes a paper loading unit 310, an image forming unit 330, the beam scanning apparatus 200, a fixing unit 340, and a paper discharging unit 350.

The paper loading unit 310 picks up sheets of paper loaded therein one by one, and feeds a sheet of paper to the image forming unit 330, including a paper feeding cassette 313 and a pickup roller 311. A pair of feeding rollers 315 that feed the sheet of paper is disposed between the paper loading unit 310 and the image forming unit 330.

The image forming unit 330 transfers images onto a sheet of paper fed from the paper loading unit 310. The image forming unit 330 includes a photosensitive medium 211 on which the beam emitted from the beam scanning apparatus 200 forms electrostatic latent images, a developing roller 333 that develops the electrostatic latent images using toner, and a transferring roller 334 that transfers the images formed on the photosensitive medium 211 onto the sheet of paper.

The beam scanning apparatus 200 scans the beam corresponding to the printing data to form the electrostatic latent images on the photosensitive medium 211.

The image forming apparatus 300 according to the present general inventive concept includes four image forming units 330 and four beam scanning apparatuses 200, each of which forms cyan images, magenta images, yellow images, and black images for full color images. At this time, a conveying belt 320 conveys the sheet of paper from the paper loading unit 310 through the four image forming units 330 in serial order.

The fixing unit 340 fixes images transferred in the image forming unit 330 onto the sheet of paper, and includes a heating roller and a pressure roller. The discharging unit 350 discharges the sheet of paper having the images fixed in the fixing unit 340 out of the image forming apparatus 300. Other parts of the image forming apparatus 300, except the beam-scanning lens 100 of FIG. 10 are the same as those of the conventional image forming apparatus, and therefore, a detailed description thereof is omitted.

Hereinafter, operation of the image forming apparatus 300 according to the present general inventive concept having the above-described structure will be explained with reference to FIG. 11.

When a printing order is received, the pickup roller 311 of the paper loading unit 310 picks up a sheet of paper P and feeds it to the conveying belt 320. The conveying belt 320 adsorbs the sheet of paper P, and conveys it to the image forming units 330. At the same time, each of the four beam scanning apparatuses 200 emits a beam according to printing data to form electrostatic latent images on each of the four photosensitive media 211. Because the beam scanning apparatus 200 uses the beam-scanning lens 100 according to an embodiment of the present general inventive concept, the scanning line formed on the photosensitive medium 211 by the beam scanning apparatus 200 is not bowed. The electrostatic latent images on the four the photosensitive media 211 are developed by the developing roller 333, respectively. The developed images on the photosensitive media 211 are transferred onto the sheet of paper P moving with the conveying belt 320 by the transferring roller 334, and form full color images. When the sheet of paper P passes through the fixing unit 340, the color images transferred onto the sheet of paper P are fixed onto the sheet of paper P. The sheet of paper P passed through the fixing unit 340 is discharged out of the image forming apparatus 300 by the discharging unit 350.

Therefore, in the image forming apparatus 300 using the beam scanning apparatus 200 according to the present general inventive concept, there is no poor image quality such as a color jitter caused by the scanning line bow of the photosensitive medium 211. Also, because the beam scanning apparatus 200 according to the present general inventive concept needs no separate adjusting apparatus to adjust the scanning line bow of the beam-scanning lens 100, the beam scanning apparatus 200 has a simpler structure than the conventional beam scanning apparatus. Furthermore, because the beam-scanning lens 100 according to the present general inventive concept requires no injection dies that could potentially set the front surface and the back surface thereof to be decentered from each other, the injection die to mold the beam-scanning lens 100 has a simple structure so that it is easy to take the beam-scanning lens 100 out of the injection die.

With a beam-scanning lens according to the present general inventive concept, and a beam scanning apparatus having the same, because a refractive index distribution of the plastic beam-scanning lens can properly adjust a scanning line bow caused by the assembling error of the scanning image forming optical system, a scanning line formed on a surface of the photosensitive medium is not bowed, and the beam spots configuring the scanning line have a substantially uniform diameter.

Also, with an image forming apparatus having a beam-scanning lens according to the present general inventive concept, a scanning line formed on the photosensitive medium surface is not bowed so that there is no poor image quality such as a color jitter.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A beam-scanning lens usable in a scanning image-forming optical system, the beam-scanning lens comprising:
a single lens (100) molded from plastic, and having a refractive index distribution curve (Δn(x)) and an effective area (107);
wherein a gap between a center axis (CL) of the refractive index distribution curve (Δn(x)) and a width centerline (105) of the effective area (107) is increased from a center of the single lens (100) to both ends of a lengthwise direction of the single lens (100).

2. The beam-scanning lens according to claim 1, wherein a dimension of the gap between the center axis (CL) of the refractive index distribution curve (Δn(x)) and the width centerline (105) of the effective area (107) is zero at the center of the lengthwise direction of the single lens (100).

3. The beam-scanning lens according to claim 1, wherein a dimension of the gap between the center axis (CL) of the refractive index distribution curve (Δn(x)) and the width centerline (105) of the effective area (107) varies from zero to a width dimension of a center plane (101) of the lengthwise direction of the single lens (100).

4. The beam-scanning lens according to any preceding claim, wherein:
the width centerline (105) of the single lens (100) is located within the effective area (107) of the single lens (100) at the center of the lengthwise direction of the single lens (100); and
the width centerline (105) of the single lens (100) is located out of the effective area (107) of the single lens (100) at both ends of the lengthwise direction of the single lens (100).

5. The beam-scanning lens according to claim 4, wherein a dimension of the gap between the width centerline (105) of the single lens (100) and the width centerline (105) of the effective area (107) varies from zero to a width dimension of the center plane (101) of the lengthwise direction of the single lens (100).

6. A beam-scanning lens usable in a scanning image forming optical system, the beam-scanning lens comprising:
a single lens (100) molded from plastic, including:
a first side (111) parallel to a main scanning direction of the single lens (100) and formed in a plane, and
a second side (112) opposite to the first side (111) and formed in a concave curved surface.

7. The beam-scanning lens according to claim 6, wherein the second side (112) is symmetric to a center axis (114) thereof, and the center axis (114) is located on the same level as a center plane (101) of a lengthwise direction of the single lens (100).

8. The beam-scanning lens according to claim 7, wherein;
the second side (112) is formed by a gap between a center axis (CL) of a refractive index distribution curve (Δn(x)) of a sub scanning direction of the single lens (100) and a width centerline (105) of an effective area (107) of the single lens (100); and
the gap is increased from a center of the single lens (100) to both ends of a lengthwise direction of the single lens (100) so that the single lens (100) adjusts the scanning line bowed before entering the single lens (100).

9. The beam-scanning lens according to claim 8, wherein a dimension of the gap between the center axis (CL) of the refractive index distribution curve (Δn(x)) and the width centerline (105) of the effective area (107) of the single lens (100) varies from zero to a width dimension of the center plane (101) of the lengthwise direction of the single lens (100).

10. A beam scanning apparatus, comprising:
a lighting source (201);
an optical deflector (209) to deflect a beam that emits from the lighting source (201); and
a beam-scanning lens (100) to focus the beam that is reflected from the optical deflector (209) to a photosensitive medium (211), the beam-scanning lens (100) having a refractive index distribution curve (Δn(x)) and an effective area (107), such that a gap between a center axis (CL) of the refractive index distribution curve (Δn(x)) and a width centerline (105) of the effective area (107) is increased from a center of the beam-scanning lens (100) to both ends of a lengthwise direction of the beam-scanning lens (100).

11. The beam scanning apparatus according to claim 10, wherein a dimension of the gap between the center axis (CL) of the refractive index distribution curve (Δn(x)) and the width centerline (105) of the effective area (107) is zero at a center plane (101) of the lengthwise direction of the beam-scanning lens (100).

12. The beam scanning apparatus according to claim 10, wherein a dimension of the gap between the center axis (CL) of the refractive index distribution curve (Δn(x)) and the width centerline (105) of the effective area (107) varies from zero to a width dimension of the center plane (101) of the lengthwise direction of the beam-scanning lens (100).

13. The beam scanning apparatus according to any one of claims 10 to 12, wherein;
a width centerline (105) of the beam-scanning lens (100) is located within the effective area (107) of the beam-scanning lens (100) at a center of the lengthwise direction of the beam-scanning lens (100); and
the width centerline (105) of the beam-scanning lens (100) is located out of the effective area (107) of the beam-scanning lens (100) at both ends of the lengthwise direction of the beam-scanning lens (100).

14. The beam scanning apparatus according to claim 13, wherein a dimension of the gap between the width centerline (105) of the beam-scanning lens (100) and the width centerline (105) of the effective area (107) of the beam-scanning lens (100) varies from zero to a width dimension of the center plane (101) of the lengthwise direction of the beam-scanning lens (100).

15. A beam scanning apparatus, comprising:
a lighting source (201);
an optical deflector (209) to deflect a beam that emits from the lighting source (201); and
a beam-scanning lens (100) to focus the beam that is reflected from the optical deflector (209) to a photosensitive medium (211), and is molded from plastic, the beam-scanning lens (100) comprising:
a first side (111) being parallel to a main scanning direction of the beam-scanning lens (100) and formed in a plane, and
a second side (112) opposite to the first side (111) and formed in a concave curved surface.

16. The beam scanning apparatus according to claim 15, wherein the second side (112) is symmetric to a center axis (114) thereof, and the center axis (114) locates on the same level as a center plane (101) of a lengthwise direction of the beam-scanning lens (100).

17. The beam scanning apparatus according to claim 16, wherein:
the second side (112) is formed by a gap between a center axis (114) of a refractive index distribution curve (Δn(x)) of a sub scanning direction of the beam-scanning lens (100) and a width centerline (105) of an effective area (107) of the beam-scanning lens (100); and
the gap is increased from a center of the beam-scanning lens (100) to both ends of a lengthwise direction of the beam-scanning lens (100) so that the beam-scanning lens (100) adjusts a scanning line bowed before entering the beam-scanning lens (100).

18. The beam scanning apparatus according to claim 17, wherein a dimension of the gap between the center axis (CL) of the refractive index distribution curve (Δn(x)) and the width centerline (105) of the effective area (107) of the beam-scanning lens (100) varies from zero to a width dimension of the center plane (101) of the lengthwise direction of the beam-scanning lens (100).

19. An image forming apparatus, comprising:
a paper loading unit (310) to pick up and feed out sheets of paper loaded therein one by one;
an image forming unit (330) having a photosensitive medium (211) to transfer images onto the sheet of paper fed by the paper loading unit (310);
a beam scanning apparatus (200) to scan a beam corresponding to printing data to form electrostatic latent images on the photosensitive medium (211), and having a plastic beam-scanning lens (100) to focus the beam onto the photosensitive medium (211), and the beam-scanning lens (100) having a refractive index distribution curve (Δn(x)) and an effective area (107), so that a gap between a center axis (CL) of the refractive index distribution curve (Δn(x)) and a width centerline (105) of the effective area (107) is increased from a center of the beam-scanning lens (100) to both ends of a lengthwise direction of the beam-scanning lens (100);
a fixing unit (340) to fix the images onto the sheet of paper passed through the image forming unit (330); and
a discharging unit (350) to discharge the sheet of paper passed through the fixing unit (340).

20. A method of scanning a beam from a beam-scanning lens (100) that is used in a scanning image forming optical system to prevent the beam from bowing in a beam scanning apparatus (200), the method comprising:
deflecting a beam of light; and
focusing the beam of light onto a photosensitive medium (211) using a beam-scanning lens (100) having a refractive index distribution curve (Δn(x)), and an effective area (107) such that a gap between a center axis (CL) of the refractive index distribution curve (Δn(x)) and a width centerline (105) of the effective area (107) is increased from a center of the beam-scanning lens (100) to both ends of a lengthwise direction of the beam-scanning lens (100).

21. A method of scanning a beam from a beam-scanning lens (100) that is used in a scanning image forming optical system to prevent a scanning line bow in an image forming apparatus, the method comprising:
scanning a beam of light corresponding to printing data to form electrostatic latent images on a photosensitive medium (211);
focusing the beam of light onto the photosensitive medium (211) using a beam-scanning lens (100) having a refractive index distribution curve (Δn(x)) and an effective area (107) such that a gap between a center axis (CL) of the refractive index distribution curve (Δn(x)) and a width centerline (105) of the effective area (107) is increased from a center of the beam-scanning lens (100) to both ends of a lengthwise direction of the beam-scanning lens (100);
transferring images onto a sheet of paper;
fixing the images onto the sheet of paper; and
discharging the sheet of paper.

22. A beam scanning lens usable in a scanning image forming optical system, the beam scanning lens comprising:
a single lens (100) having opposite sides which are decentered from each other such that a reflective index increases from a center thereof to opposite ends thereof in a first direction and such that a second reflective index increases from the center thereof to the opposite ends thereof in a second direction.

23. The beam scanning lens of claim 22, wherein:
the first direction is a lengthwise direction of the single lens (100); and
the second direction is perpendicular to the first direction.

24. The beam scanning lens of claim 22 or claim 23, wherein the opposite sides comprise a flat surface and a concave surface, respectively.

25. The beam scanning lens of any one of claims 22 to 24, wherein the single lens (100) further comprises another opposite side disposed between the opposite sides in a lengthwise direction of the single lens (100) such that a reflective index distribution curve has a second ordered curve shape.

26. The beam scanning lens of claim 22, wherein the single lens (100) further comprises an effective area (107) formed along the second direction to allow a beam to pass a centerline thereof, and the centerline of the effective area (107) is not a centerline of the opposite sides.

27. A beam scanning apparatus (200) usable in a scanning image forming optical system, the beam scanning lens comprising:
a photo sensitive medium; and
a single lens (100) disposed between the optical reflector and the photo sensitive medium to sum a received light from the optical reflector onto the photo sensitive medium, the single lens (100) comprising:
opposite sides which are decentered from each other such that a reflective index increases from a center thereof to opposite ends thereof in a first direction and such that a second reflective index increases from the center thereof to the opposite ends thereof in a second direction.

28. A beam scanning lens usable in a scanning image forming optical system, the beam scanning lens comprising:
a first side (111);
a second side (112) spaced apart from the first side (111), and having a width centerline (105) between the first side (111) and the second side (112); and
an effective area (107) formed between the first side (111) and the second side (112) and having another centerline through which a beam passes, the another centerline being concave with the width centerline (105) of the first side (111) and the second side (112) at a center thereof and being different from the width centerline (105) of the first side (111) and the second side (112) at ends thereof.

29. The beam scanning lens of claim 28, wherein shapes of the first side (111) and the second side (112) vary along the width centerline (105) of the effective area (107).
